# EUROPÄISCHE PATENTSCHRIFT

(11) **EP 1 265 726 B1**
(45) Veröffentlichungstag und Bekanntmachung des Hinweises auf die Patenterteilung: **26.12.2007**
(21) Anmeldenummer: 01933667.6
(22) Anmeldetag: 07.03.2001
(51) Int. Cl.: B23P 19/04, B23P 6/00, B26F 3/00

(54) **VERFAHREN ZUM ENTFERNEN EINES DICHTMITTELS**
METHOD FOR REMOVING A SEAL
PROCEDE PERMETTANT DE DEMONTER UN ELEMENT D'ETANCHEITE

(30) Priorität: 22.03.2000 EP 00106226
(43) Veröffentlichungstag der Anmeldung: 18.12.2002
(73) Patentinhaber: SIEMENS AKTIENGESELLSCHAFT, 80333 München (DE)
(72) Erfinder: KROCKOW, Wolfram, 40213 Düsseldorf (DE); KEFALAS, Nikolaos, 46485 Wesel (DE)
(86) Internationale Anmeldenummer: PCT/EP2001/002579
(87) Internationale Veröffentlichungsnummer: WO 2001/070451

(56) Entgegenhaltungen:
- EP-A- 0 430 856
- EP-A- 0 753 376
- GB-A- 2 197 580
- US-A- 5 738 730

## Beschreibung

Die Erfindung betrifft ein besonders kostengünstiges und einfaches Verfahren zum Entfernen eines Dichtmittels, welches mittels eines Klemmmittels in einer Nut eines Bauteils gehalten ist.

Ein solches Dichtmittel ist beispielsweise ein Dichtband, welches an einem Gehäuse oder an einem Läufer einer Turbomaschine befestigt ist, um den Spalt zwischen der Welle des Läufers und einer an dem Gehäuse befestigten Leitschaufel oder zwischen dem Gehäuse und einer Laufschaufel des Läufers gegen ein durchströmendes Aktionsmedium, welches den Läufer antreibt, abzudichten. Sind dabei, in Achsrichtung des Läufers betrachtet, abwechselnd hintereinander jeweils ein Dichtband am Gehäuse oder der Leitschaufel und jeweils ein Dichtband an der Welle oder der Laufschaufel des Läufers angeordnet, so spricht man auch von einer sogenannten Labyrinthdichtung. Das Aktionsmedium dringt durch dieses Labyrinth von Dichtungen kaum mehr hindurch, so dass die Leistung der Turbomaschine aufgrund dieses Verlustes an Aktionsmedium nur gering geschmälert ist.

Zur Vereinfachung wird im Folgenden von dem Gehäuse der Turbomaschine gesprochen, wenn von dem Gehäuse als solchem oder von einer mit dem Gehäuse fest verbundenen Leitschaufel die Rede ist, und von dem Läufer gesprochen, wenn von dem Läufer als solchem oder von einer mit dem Läufer fest verbundenen Laufschaufel die Rede ist.

Das in den Spalt zwischen Gehäuse und Läufer hineinragende Dichtband ist in der Regel an seiner Befestigungsseite L-förmig ausgestaltet. Die in L-Form ausgestaltete Befestigungsseite des Dichtbandes wird in eine Nut am Gehäuse oder an dem Läufer eingesetzt. Zur Befestigung des Dichtbandes an dem Gehäuse oder dem Läufer wird anschließend ein Klemmmittel in die Nut eingebracht. Als Klemmmittel, auch Stemmelement genannt, wird ein Stemmdraht in die Nut eingemeißelt. Das Dichtband hält aufgrund der hohen durch den Stemmdraht entwickelten Reibungskräfte fest in der Nut.

Für Turbomaschinen, die hohen Temperaturen ausgesetzt sind, wie z.B. Gas- oder Dampfturbinen, werden sowohl für das Dichtband als auch für das Stemmelement temperaturbeständige Materialien wie insbesondere hochwarmfeste Metalllegierungen oder Stähle eingesetzt. Für ein metallisches Stemmelement wird üblicherweise auch der Begriff "Stemmdraht" verwendet.

Aufgrund der hohen mechanischen Belastungen zeigen die Dichtbänder in Turbomaschinen in der Regel nach einigen 10.000 Stunden einen derartigen Verschleiß, dass sie ihrer Dichtfunktion nicht mehr gerecht werden können. Die Dichtbänder müssen daher von Zeit zu Zeit ausgetauscht werden.

Zum Austausch des Dichtbandes ist es bislang bekannt, das Stemmelement oder Klemmmittel in aufwendiger Art und Weise mechanisch abzudrehen.

Aufgabe der Erfindung ist es, ein Verfahren zum Entfernen eines Dichtmittels, welches in einer Nut eines Bauteils gehalten ist, anzugeben, welches gegenüber Verfahren des Standes der Technik weniger Zeitaufwand benötigt und dadurch kostengünstiger ist.

Diese Aufgabe wird erfindungsgemäß durch ein Verfahren zum Entfernen eines Dichtmittels, welches mit einem Klemmmittel in einer Nut eines Bauteils gehalten ist, gelöst, wobei ein Flüssigkeitsstrahl unter hohem Druck in die Nut zwischen das Dichtmittel und das Klemmmittel oder zwischen das Klemmmittel und das Bauteil gerichtet wird, wodurch zumindest das Klemmmittel aus der Nut herausgelöst wird.

Umfangreiche Untersuchungen haben ergeben, dass ein in eine Nut gerichteter Flüssigkeitsstrahl einen so hohen Druck entwickeln kann, dass selbst ein mit einem stählernen Klemmmittel in der Nut gehaltenes Dichtmittel in einfacher Art und Weise in einem Bruchteil der bisher benötigten Zeit aus der Nut herausgelöst werden kann. Hierbei kommt es zu keiner Beschädigungen der Nut, selbst wenn das Material, aus der die Nut herausgearbeitet ist weicher ist, als das Material des Klemmmittels.

Obschon bislang von rotationssymmetrischen Bauteilen von Turbomaschinen die Rede war, so sei prinzipiell dennoch anzumerken, dass die Erfindung sich prinzipiell dazu eignet, jedwede mit einem Klemmmittel in einer Nut gehaltene Dichtmittel in einfacher Art und Weise zu entfernen. Ob es sich bei dem Bauteil um Teile eines Kompressors, einer Gasturbine, einer Dampfturbine, einer Pumpe, eines Generators oder einer sonstigen Vorrichtung handelt, spielt für die Anwendung der Erfindung keine Rolle.

Gleichwohl ist es hinsichtlich der bei Revision von Turbinen auftretenden hohen Kosten vorteilhaft, wenn das Verfahren angewendet wird, um ein Dichtband aus einer Nut eines Bauteils, beispielsweise eines Läufer oder eines Gehäuses einer Turbomaschine, insbesondere einer Dampf- oder Gasturbine, herauszulösen. Ein solches Dichtband ist, wie eingangs erwähnt, mittels eines Klemmmittels in einer Nut des Bauteils gehalten. Der Flüssigkeitsstrahl wird zum Herauslösen eines solchen Dichtmittels zwischen das Dichtmittel und das Bauteil gerichtet, wodurch das Dichtmittel aus der Nut herausgelöst wird. Alternativ kann der Flüssigkeitsstrahl zwischen das Dichtmittel und das Klemmmittel gerichtet werden, wodurch zumindest das Klemmmittel aus der Nut herausgelöst wird und das Dichtmittel anschließend leicht aus der Nut entfernt wird, beispielsweise manuell. Für das Entfernen eines mit Hilfe eines Stemmdrahts in einer Turbomaschine eingesetzten Dichtbandes wird auf diese Weise gegenüber dem bisherigen Verfahren des Abdrehens eine Zeitersparnis von 75 bis 90% erzielt. Nach Herauslösen des Klemmmittels kann das Dichtmittel in einfacher Art und Weise ausgetauscht werden.

Vorteilhafterweise wird der Flüssigkeitsstrahl entlang der Nut geführt. Dadurch wird das Dichtmittel oder das Klemmmittel kontinuierlich aus der Nut gelöst.

Mit Vorteil findet das Verfahren Anwendung zum Herauslösen eines stählernen Drahts aus einer stählernen Nut. Hierbei können sowohl der Draht als auch das Material, aus der die Nut herausgearbeitet ist, aus hochlegiertem oder hochwarmfesten Stahl sein. Das Material der Nut kann jedoch auch Gussstahl sein, beispielsweise Grauguss, während der Draht aus einem hochlegierten Stahl ist. Das Verfahren ist mit Vorteil auch in solchen Fälle anwendbar, in denen das Material des Klemmmittels mechanisch widerstandsfähiger ist als das Material der Nut.

In einer weiteren vorteilhaften Ausgestaltung der Erfindung wird als Klemmmittel ein metallisches Stemmelement zur Halterung des als Dichtband ausgestalteten Dichtmittels aus der Nut eines Läufers oder eines Gehäuses einer Turbomaschine, insbesondere eines Turbokompressors, einer Dampfturbine oder einer Gasturbine, herausgelöst.

Vorteilhafterweise wird der Flüssigkeitsstrahl mit einem Druck zwischen 750 und 4000 bar ausgestoßen. Die Wahl des Druckes ist dabei von dem Material des Klemmmittels, des Dichtmittels und von dem Material des Bauteils abhängig. Insbesondere hat es sich zum Entfernen eines metallischen Klemmmittels in Form eines metallischen Stemmdrahts zur Halterung eines Dichtbandes in einer Turbomaschine als vorteilhaft erwiesen, wenn der Flüssigkeitsstrahl mit einem Druck zwischen 2000 und 3000 bar ausgestoßen wird. Das Klemmmittel wird hierbei leicht aus der Nut herausgelöst, ohne dass es zu mechanischen Beschädigungen des Bauteils kommt.

In einer besonders vorteilhaften Alternative der Erfindung wird als Flüssigkeit Wasser verwendet. Bei Verwendung von Wasser sind keine aufwendigen Maßnahmen erforderlich, um Umweltauflagen zu entsprechen.

Zweckmäßigerweise wird ein Flüssigkeitsstrahl verwendet, dessen Breite am Ort des Auftreffens in der Nut 0,5 bis 1,5 mal so groß ist wie die Breite der Nut. Der Erfolg beim Herauslösen eines sehr fest in die Nut eingebrachten Klemmmittels hängt maßgeblich vom Druck ab, den der Flüssigkeitsstrahl unter dem Klemmmittel in der Nut entfaltet. Dieser Druck ist abhangig von der Flüssigkeitsmenge, die pro Zeit unter das klemmmittel eingebracht wird, und der Geschwindigkeit, mit der die Flüssigkeit in der Nut auftrifft. Je mehr Flüssigkeit pro Zeit in die Nut eingebracht wird, desto größer ist der entfaltete Druck unter dem Klemmmittel. Wird eine schmaler Flussigkeitsstrahl verwendet, so kann der eventuell nötige Druck nur durch eine sehr hohe Geschwindigkeit der Flüssigkeit erreicht werden. Hierdurch kann jedoch die Nut ausgewaschen werden, also ihre Form verändern, was nicht gewünscht ist. Versuche haben gezeigt, dass ein Flüssigkeitsstrahl, der am Ort des Auftreffens in der Nut mindestens halb so breit wie die Nut ist, eine besonders gute Wirkung hinsichtlich der Entfernung des Klemmmittels entfaltet. Ist der Strahl wesentlich breiter als die Nut, so wird lediglich viel Flüssigkeit verbraucht, bei kaum veränderter Effizienz der Flüssigkeit.

Mit Vorteil wird das Dichtmittel und/oder das Klemmmittel während des Herauslösens aus der Nut straff gehalten. Es wird zweckmäßigerweise das Element straff gehalten, unter das der Flüssigkeitsstrahl gelenkt wird. Ohne ein solches Straffhalten würde das jeweilige Element im Flüssigkeitsstrahl flattern oder von der Flüssigkeit weggebogen werden und eventuell abbrechen. Ein Abbrechen des zu entfernenden Elements wirkt sich jedoch negativ aus, da die Flüssigkeit unter dem in der Nut verbleibenden Stumpf weniger Druck entfalten kann, als unter einem im Bereich des Strahls intakten Elements.

Ein Ausführungsbeispiel der Erfindung wird anhand einer Zeichnung mit drei Figuren näher erläutert. Dabei zeigen:
- FIG 1: in perspektivischer Darstellung ein Teil eines Gehäuses einer Dampfturbine, wobei in das Gehäuse eine Reihe von Dichtbändern eingesetzt ist;
- FIG 2: in perspektivischer Darstellung einen vergrößerten Ausschnitt aus Figur 1 zur Verdeutlichung der Befestigung des Dichtbandes in dem Gehäuse und
- FIG 3: in schematischer Darstellung das Entfernen des in Figur 1 gezeigten Dichtbandes mittels eines gerichteten Flüssigkeitsstrahls.

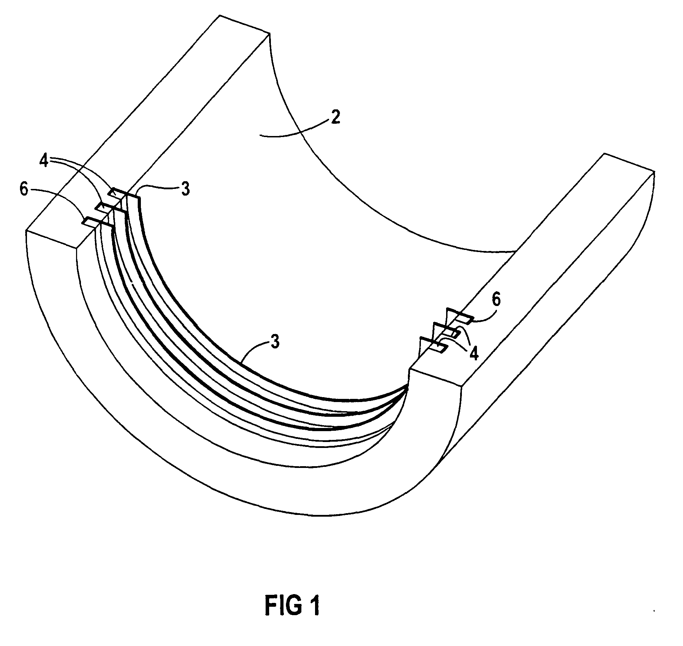

In Figur 1 ist in perspektivischer Darstellung ein Teil eines Gehäuses 2 aus Grauguss einer Dampfturbine dargestellt. Der gezeigte Teil ist die Hälfte eines Hohlzylinders, in dessen Inneren der nicht gezeigte Läufer der Dampfturbine rotiert. Zur Abdichtung des Spaltes zwischen Gehäuse 2 und Läufer sind, in Achsrichtung des Läufers betrachtet, hintereinander an dem Gehäuse 2 eine Reihe von Dichtbändern 3 eingesetzt, welche jeweils in den Spalt hineinragen. Zur Vereinfachung der Darstellung sind lediglich drei dieser Dichtbänder 3 gezeigt. Jeweils zwischen zwei benachbarten Dichtbändern 3 des Gehäuses 2 greifen Dichtbänder ein, die an dem Läufer angeordnet sind. Es handelt sich also um eine sogenannte Labyrinthdichtung des Spaltes zwischen Läufer und Gehäuse 2.

Jedes Dichtband 3 ist mittels eines metallischen Klemmmittels 4 in eine Nut 6 in dem Gehäuse 2 befestigt. Das Klemmmittel ist ein Stemmdraht aus einem hochlegierten Stahl.

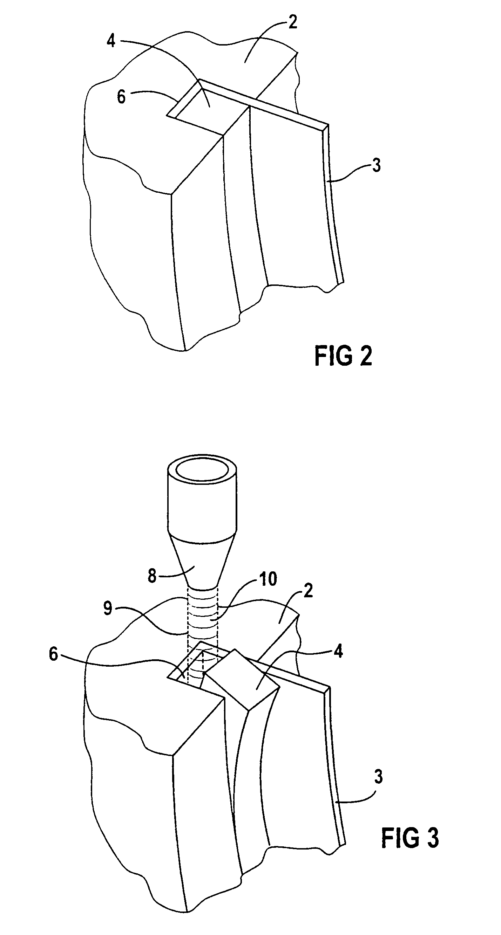

In Figur 2 ist nun in vergrößerter Darstellung die Befestigung des Dichtbandes 3 an dem Gehäuse 2 deutlich sichtbar. Das Dichtband 3 ist an seiner Befestigungsseite L-förmig ausgeführt. Die Befestigungsseite des Dichtbands 3 wird in die Nut 6 des Gehäuses 2 eingesetzt und anschließend mit dem Klemmmittel 4 in die Nut 6 mechanisch fest eingepresst oder eingestemmt. Es entsteht somit eine dauerhafte und mechanisch stabile Verbindung zwischen dem Dichtband 3 und dem Gehäuse 2. Gleiches gilt sinngemäß natürlich auch für den Läufer.

Figur 3 zeigt nun, wie das Dichtband 3 aus der Nut 6 des Gehäuses entfernt wird, z.B. wenn es aufgrund eines mechanischen Verschleißes seine Dichtfunktion nicht mehr gewährleisten kann. In einem nicht näher dargestellten Hochdruckaggregat wird Flüssigkeit auf einen Druck von zwischen 2000 bar und 3000 bar gebracht. Als Flüssigkeit findet Wasser Verwendung. Mittels einer Düse 8 wird ein Flüssigkeitsstrahl 9 unter hohem Druck zwischen das Klemmmittel 4 und das Dichtband 3 gerichtet. Auf diese Weise löst sich das Klemmmittel 4 in der Nut 6 von dem Dichtband 3 und wird aufgrund des hohen Druckes der Flüssigkeit aus der Nut 6 gepresst. Im dargestellten Fall wird das Verfahren an der gezeigten Stelle begonnen. Der Flüssigkeitsstrahl 9 wird dann mittels der Düse 8 entlang der Nut 6 geführt, wodurch das Klemmmittel 4 allmählich aus der Nut 6 herausgelöst wird. Während des Herauslösens wird das Klemmmittel 4 durch eine geeignete Vorrichtung kontinuierlich straff gehalten. Die Düse 8 kann kontinuierlich der Rundung der Nut 6 folgen und insofern den Flüssigkeitsstrahl 9 stets zwischen Dichtband 3 und Klemmmittel 4 richten.

Die Breite des Flüssigkeitsstrahls beträgt am Ort des Auftreffens in der Nut etwa 1 mm, wobei die Nut 6 eine Breite von 1,5 mm und das Klemmmittel 4 eine Breite von 1,25 mm aufweist. Der Flüssigkeitsstrahl 9 ist somit 0,67 mal so breit wie die Nut 6 und 0,8 mal so breit wie das Klemmmittel 4.

## Patentansprüche

1. Verfahren zum Entfernen eines Dichtmittels (3), welches mit einem Klemmmittel (4)in einer Nut (6) eines Bauteils gehalten ist, wobei ein Flüssigkeitsstrahl (9) unter hohem Druck in die Nut (6) zwischen das Dichtmittel (3) und das Klemmmittel (4) oder zwischen das Klemmmittel (4) und das Bauteil gerichtet wird, wodurch zumindest das Klemmmittel (4) aus der Nut (6) herausgelöst wird.

2. Verfahren nach Anspruch 1, bei dem der Flüssigkeitsstrahl (9) entlang der Nut (6) geführt wird.

3. Verfahren nach Anspruch 1 oder 2, bei dem als Klemmmittel (4) ein stählerner Draht aus einer stählernen Nut (6) herausgelöst wird.

4. Verfahren nach einem der vorhergehenden Ansprüche, bei dem als Klemmmittel (4) ein metallisches Stemmelement (4) zur Halterung des als Dichtband ausgestalteten Dichtmittels (3) aus der Nut (6) eines Läufers oder eines Gehäuses (2) einer Turbomaschine, insbesondere eines Turbokompressors, einer Dampfturbine oder einer Gasturbine, herausgelöst wird.

5. Verfahren nach einem der vorhergehenden Ansprüche, bei dem der Flüssigkeitsstrahl (9) mit einem Druck zwischen 750 und 4000 bar, insbesondere zwischen 2000 und 3000 bar ausgestoßen wird.

6. Verfahren nach einem der vorhergehenden Ansprüche, bei dem als Flüssigkeit Wasser (10) verwendet wird.

7. Verfahren nach einem der vorhergehenden Ansprüche, bei dem die Breite des Flüssigkeitsstrahls (9) am Ort des Auftreffens in der Nut (6) 0,5 bis 1,5 mal so groß ist wie die Nutbreite.

8. Verfahren nach einem der vorhergehenden Ansprüche, bei dem das Dichtmittel (3) und/oder das Klemmmittel (4) während des Herauslösens aus der Nut (6) straff gehalten wird.

## Claims

1. Method for removing a sealing means (3) which is held by a clamping means (4) in a groove (6) of a component, a fluid jet (9) being directed into the groove (6) at high pressure between the sealing means (3) and the clamping means (4) or between the clamping means (4) and the component, by which means the clamping means (4) at least is released from the groove (6).

2. Method according to Claim 1, in which the fluid jet (9) is guided along the groove (6).

3. Method according to Claim 1 or 2, in which a steel wire, as the clamping means (4), is released from a steel groove (6).

4. Method according to one of the preceding claims, in which a metallic caulking element (4), as the clamping means (4) for retaining the sealing means (3) embodied as a sealing strip, is released from the groove (6) of a rotor or a casing (2) of a turbomachine, in particular a turbocompressor, a steam turbine or a gas turbine.

5. Method according to one of the preceding claims, in which the fluid jet (9) is ejected at a pressure between 750 and 4000 bar, in particular between 2000 and 3000 bar.

6. Method according to one of the preceding claims, in which water (10) is used as the fluid.

7. Method according to one of the preceding claims, in which the width of the fluid jet (9) at the impingement location in the groove (6) is between 0.5 and 1.5 times as large as the groove width.

8. Method according to one of the preceding claims, in which the sealing means (3) and/or the clamping means (4) are held tight during the release procedure from the groove (6).

## Revendications

1. Procédé d'enlèvement d'un moyen (3) d'étanchéité qui est maintenu par un moyen (4) de serrage dans une rainure (6) d'un élément, dans lequel on dirige un jet (9) de liquide sous haute pression dans la rainure (6) entre le moyen (3) d'étanchéité et le moyen (4) de serrage ou entre le moyen (4) de serrage et l'élément, ce qui détache au moins le moyen (4) de serrage de la rainure (6).

2. Procédé suivant la revendication 1, dans lequel on fait passer le jet (9) de liquide le long de la rainure (6).

3. Procédé suivant la revendication 1 ou 2, dans lequel on détache comme moyen (4) de serrage un fil d'acier d'une rainure (6) en acier.

4. Procédé suivant l'une des revendications précédentes, dans lequel on détache comme moyen (4) de serrage un élément (4) métallique de matage pour le maintien du moyen (3) d'étanchéité conformé en ruban d'étanchéité de la gorge (6) d'un rotor ou d'un carter d'une turbomachine, notamment d'un turbocompresseur, d'une turbine à vapeur ou d'une turbine à gaz.

5. Procédé suivant l'une des revendications précédentes, dans lequel on éjecte le jet (9) de liquide sous une pression comprise entre 750 et 4 000 bars, notamment comprise entre 2 000 et 3 000 bars.

6. Procédé suivant l'une des revendications précédentes, dans lequel on utilise de l'eau (10) comme liquide.

7. Procédé suivant l'une des revendications précédentes, dans lequel la largeur du jet (9) de liquide à l'endroit où il arrive dans la rainure (6) représente de 0,5 à 1,5 fois la largeur de la rainure.

8. Procédé suivant l'une des revendications précédentes, dans lequel on maintient le moyen (3) d'étanchéité et/ou le moyen (4) de serrage tendu pendant qu'on le détache de la rainure (6).
